# EUROPEAN PATENT APPLICATION

(11) **EP 4 764 431 A2**
(43) Date of publication of application: **24.06.2026**
(21) Application number: 25212085.2
(22) Date of filing: 29.10.2025
(51) Int. Cl.: G01J 3/02, G01J 3/18, G01J 3/04

(54) **A MINIATURE SPECTROMETER**

(30) Priority: 29.10.2024 US 202418929693
(71) Applicant: Lightmachinery Inc., Nepean, ON K2E 7L2 (CA)
(72) Inventor: BEATON, Alexander, Nepean, ON K2E 7L2 (CA); HUNTER, John, Nepean, ON K2E 7L2 (CA); MILLER, Ian J., Nepean, ON K2E 7L2 (CA)
(74) Representative: Icosa

(57) **Abstract**

A monolithic, fully-immersed spectrometer using crossed cylindrical lenses enables independent focusing of the incoming beam along the two principal axes, e.g. x-axis and y-axis, perpendicular to the optical axis. A first lens "flattens" the beam before entering the body of a second curved, reflective lens, so the second lens only needs to focus in one axis. This restricts the curvature to 1-dimension and therefore reduces the thickness of the device by an order of magnitude compared to a design based on spherical lenses. A cylindrical-based design greatly increases manufacturability and scalability.

## Description

### TECHNICAL FIELD

The present disclosure relates to a spectrometer, and in particular to a high-resolution miniature spectrometer

### BACKGROUND

Spectrometers are used for many applications in astronomy, chemistry, materials science, and physics to capture and spectrally resolve light. A basic spectrometer collects light through an entrance slit, collimates this light with a lens, passes the light to a dispersive optic, such as an optical grating, then refocuses the dispersed light with another lens onto a detector. All of the individual refractive components are typically mounted in air with motion control stages for alignment. High-end spectrometers, with high spectral resolution, large wavelength range, and high throughput, typically require larger optics, are difficult to manufacture and align, are more sensitive to their environment, and are more expensive. This has historically prohibited the widespread use of precision spectroscopy in applications that require compactness, robustness, and scalability, such as rapid on-site drug detection, soil and crop monitoring for agriculture, and satellite-based remote sensing.

The problem of compactness can be simply addressed by making all the components smaller. This unfortunately comes with a drop in resolution and throughput. While miniature spectrometers of this nature are commercially available, e.g. as convenient lab tools, the loss of performance prevents adoption of this solution into many fields which demand higher spectral precision. One other approach to increase performance of a spectrometer is to immerse the diffraction grating in a high-index material. This allows a required resolving power to be achieved using a smaller grating and protects the grating from contamination. Miniature spectrometers have been designed around immersed gratings, but these still involve air gaps between all other components and maintain the mechanical complexity of typical spectrometers.

An object of the present disclosure is to provide a miniature spectrometer with high resolution.

### SUMMARY

Accordingly, a first apparatus includes a spectrometer comprising:
an input port for launching a beam of light;
a first cylindrical lens for collimating the beam of light in only a first direction;
a monolithic second cylindrical lens, including a curved reflective surface, for collimating the beam of light in a second direction, perpendicular to the first direction, and reflecting the beam of light;
a diffractive element for angularly dispersing the beam of light into a plurality of optical wavelength ranges and directing the plurality of optical wavelength ranges back to the curved reflective surface, which focuses the plurality of optical wavelength ranges in the second direction;
a third cylindrical lens configured for focusing the plurality of optical wavelength ranges in the first direction, providing a plurality of spots; and
a detector array for receiving the plurality of spots.

According to any of the aforementioned embodiments the input port may include an optical fiber with an optical core surrounded by cladding; and wherein the optical fiber includes a reflective coating on an end thereof with a transparent slit therein extending diametrically across the end with a width narrower than the optical core.

According to any of the aforementioned embodiments the first lens may include a reflective coating on an end thereof with a transparent slit therein extending diametrically across the end with a width narrower than the optical core.

According to any of the aforementioned embodiments the second lens may comprise a single lensed section with a single radius of curvature.

According to any of the aforementioned embodiments the radius of curvature of the second lens may be between 30 mm to 150 mm.

According to any of the aforementioned embodiments the second lens may comprise multiple lensed sections with different radiuses of curvature.

According to any of the aforementioned embodiments the radius of curvature of the multiple lensed sections of the second lens may be between 30 mm to 150mm.

According to any of the aforementioned embodiments the second lens may have a thickness of 0.2 mm-10 mm.

According to any of the aforementioned embodiments the second lens may have a thickness of 100 µm to 200 µm.

According to any of the aforementioned embodiments the dispersive element may be provided directly into a side of the second lens.

According to any of the aforementioned embodiments the second lens may have a refractive index greater than 1.4.

According to any of the aforementioned embodiments the second lens may have a refractive index greater than 3.

According to any of the aforementioned embodiments the spectrometer may further comprise:
a plurality of additional input ports for launching a plurality of additional beams of light;
a plurality of first lenses, each of the plurality of first lenses configured for collimating a respective one of the plurality of additional beams of light in only the first direction;
wherein the second lens collimates the plurality of additional beams of light in the second direction, and reflects the plurality of additional beams of light;
wherein the diffractive element angularly disperses each of the plurality of additional beams of light into a respective plurality of optical wavelength ranges, and directs each of the respective plurality of optical wavelength ranges back to the curved reflective surface, which focuses each of the respective plurality of optical wavelength ranges in the second direction;
a plurality of third lenses configured for focusing the respective plurality of optical wavelength ranges in the first direction, providing a plurality of spots; and
wherein the detector array receives each of the respective plurality of optical wavelength ranges.

According to any of the aforementioned embodiments the diffractive element may comprise a plurality of gratings with different lines/mm configured to provide a different wavelength band for each respective input optical signal.

According to any of the aforementioned embodiments the detector array may comprise a plurality of detector arrays, each with a different wavelength band for each input optical signal.

According to a second apparatus a spectrometer comprises:
an input port for launching a beam of light;
a first cylindrical lens for collimating the beam of light in only a first direction;
a monolithic second cylindrical lens, including a curved reflective surface, for collimating the beam of light in a second direction, perpendicular to the first direction, and reflecting the beam of light;
a diffractive element for angularly dispersing the beam of light into a plurality of optical wavelength ranges, and directing the plurality of optical wavelength ranges back to the curved reflective surface, which focuses the plurality of optical wavelength ranges in the second direction;
a third cylindrical lens configured for focusing the plurality of optical wavelength ranges in the first direction, providing a plurality of spots; and
a movable optical fiber reciprocatable across a focal plane of the third cylindrical lens to collect one of the plurality of spots.

According to any of the aforementioned embodiments the input port may include an optical fiber with an optical core surrounded by cladding; and wherein the optical fiber includes a reflective coating on an end thereof with a slit removed therefrom extending diametrically across the end with a width narrower than the optical core.

According to any of the aforementioned embodiments the first lens may include a reflective coating on an end thereof with a slit removed therefrom extending diametrically across the end with a width narrower than the optical core.

According to any of the aforementioned embodiments the second lens may comprises a single lensed section with a single radius of curvature.

According to any of the aforementioned embodiments the radius of curvature of the second lens may be between 30 mm to 150 mm.

### BRIEF DESCRIPTION OF THE DRAWINGS

Some example embodiments will be described in greater detail with reference to the accompanying drawings, wherein:
FIG. 1 is an isometric view in accordance with an exemplary spectrometer; and
FIG. 2 is a top view of the spectrometer of FIG. 1;
FIG. 3 is a side view of the input port of the spectrometer of FIG. 1;
FIG. 4 is an end view of the input optical fiber with an input slit;
FIG. 5 is a side view of an output port of the spectrometer of FIG. 1;
FIG. 6 is a top view of an alternate exemplary spectrometer including a high pass filter;
FIG. 7 is an isometric view of an alternate exemplary spectrometer including multiple input ports;
FIG. 8 is an isometric view of the spectrometer of FIG. 7; and
FIG. 9 is an isometric view of an exemplary monochromator.

### DETAILED DESCRIPTION

While the present teachings are described in conjunction with various embodiments and examples, it is not intended that the present teachings be limited to such embodiments. On the contrary, the present teachings encompass various alternatives and equivalents, as will be appreciated by those of skill in the art.

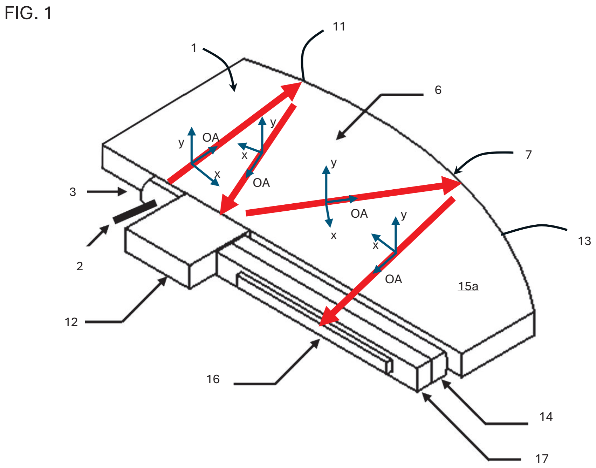

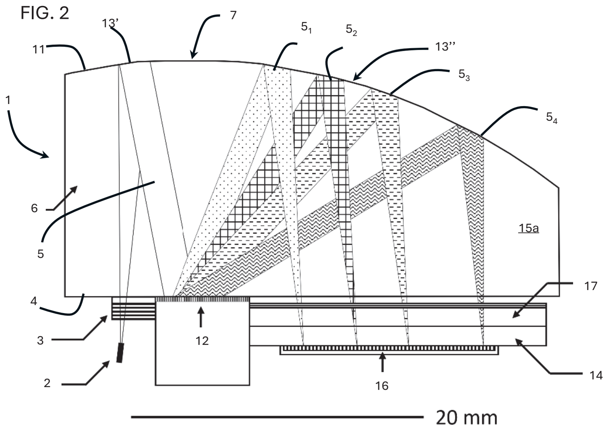

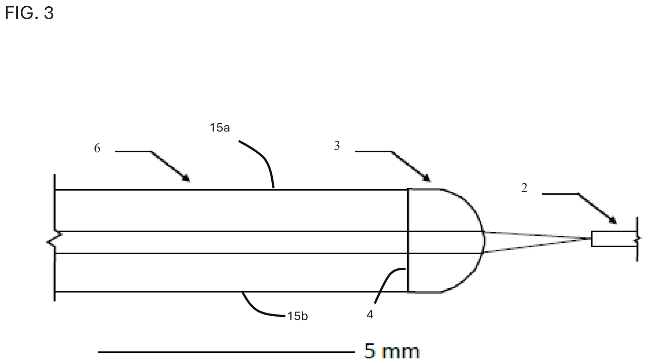

FIGS. 1 & 2 illustrate an optical spectrometer 1, configured to be optically coupled to an input optical fiber 2 for launching an input optical signal 5, typically comprising a plurality of different optical wavelength ranges. For this description, the optical axis (OA) of the a first lens 3 is always collinear to the direction of propagation of the input optical signal 5, the x-axis is horizontal and always perpendicular to the optical axis (OA), and the y-axis is vertical. The input optical fiber 2 is fixed adjacent to, e.g. butted up to, the first lens 3, e.g. collimating and cylindrical, forming an input port, configured for collimating the beam of light leaving the input optical fiber 2 in a first direction, e.g. the y-axis (out of the page in FIG. 2 and parallel to the page of FIG. 3) and enables the beam of light to diverge in the perpendicular direction, e.g. the x-axis (parallel to the page of FIG. 2 and out of the page in FIG. 3). Accordingly, the spectrometer 1 can have a very small thickness or height, i.e. substantially the width of the collimated beam of light. Ideally, the first lens 3 is cylindrical, but other forms of lenses, e.g. spherical, are possible in other variants.

With reference to FIG. 3, the beam of light diverges after exiting the input optical fiber 2, and the angle of divergence depends on its numerical aperture (NA). The radius of curvature of the first lens 3 is configured to collimate the beam of light from the input optical fiber 2 in the first direction, e.g. the y-axis. The distance between the input optical fiber 2 and the first lens 3, along with the focal length of the first lens 3, is configured to provide a desired beam size inside a second lens 6, e.g. cylindrical and reflective, which is crossed relative to the first lens 3. The height of the first lens 3 substantially matches the thickness of the second lens 6. For small NA input optical fibers 2, e.g. below 0.16, a single cylindrical first lens 3 is sufficient to collimate the input in the y-axis. For larger NA input optical fibers 2, additional optical elements may be required to achieve the desired collimation. The embodiment presented here assumes a low NA input optical fiber 2.

The first (cylindrical) lens 3 is coupled, e.g. bonded, to a first side 4, e.g. a flat side, of a monolithic block defining the second (cylindrical) lens 6. A reflective coating 7, e.g. 95%-100% reflective for light used in input optical signal 5, is provided on a curved outer surface on a second side 11 of the second (cylindrical) lens 6 opposite the first side 4. Top surface 15a and bottom surfaces 15b, extend parallel to each other and perpendicular to the first side 4 and the second side 11,

The input optical fiber 2 or the first (cylindrical) lens 3 may include a reflective coating, i.e. reflective to the input optical signal 5, deposited directly on an output facet of the input optical fiber 2 and/or an input facet of first (cylindrical) lens 3 with a transparent input slit 8 provided therein, transparent to the input optical signal 5. The transparent input slit 8 extends diametrically across the end of the input optical fiber 2, and exposes the entire width of the optical core 10 of the input optical fiber 2 in a longitudinal direction but only a portion of the width of the optical core 10 in the perpendicular (lateral) direction. The longitudinal direction of the input slit 8 extends in the first direction, e.g. along the y-axis, perpendicular to the top surface 15a and the bottom surface 15b of the second lens 6, and perpendicular to the optical axis of the first lens 3, so that the input optical signal 5 has a beam height 2x to 4x larger than the beam width as it enters the first lens 3, and the second lens 6. The lateral width w of the input slit 8 can be ¼ to ½ the diameter of the optical core 10, e.g. 25 µm to 50 µm, preferably about 1/3 of the diameter of the optical core 10, e.g. 33 µm. The input slit 8 can have any height, i.e. longitudinal width, such as the diameter of the input optical fiber 2 or the height of the first lens 3. The longitudinal dimension of the exposed optical core 10 is preferably less than the thickness of the first lens 3 and the second lens 6, e.g. ½ to 1/20 the thickness of the first lens 3 and/or the second lens 6, preferably about 1/10 the thickness.

The monolithic block of the second lens 6 may be comprised of glass or crystal, e.g. one or more of calcium fluoride (CaF2), silicon, germanium, N-BK7, or fused silica. The higher-index material, e.g. n >1, preferably n >1.4, more preferably n > 3, in the form of a spherical lens cross-section, can perform the functions of collimating, focusing, and otherwise directing the light to each component.

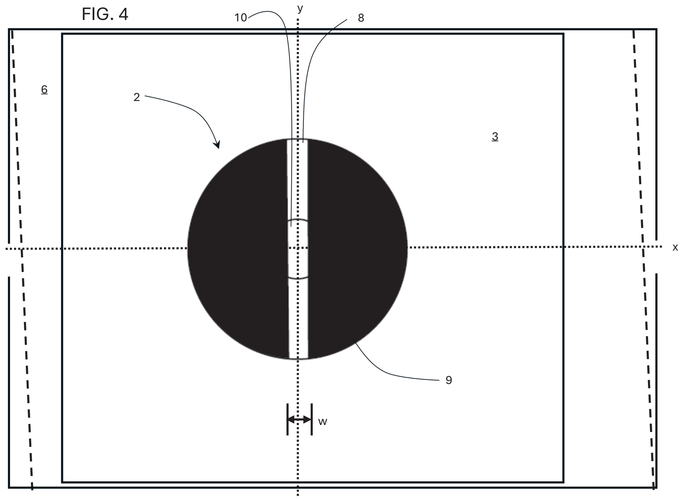

With reference to FIG. 4, in some embodiments, the input slit 8 is fabricated directly on the face of the input optical fiber 2. The tip of the input optical fiber 2 includes a reflective metallized coating 9 with a diametrically extending narrow strip of material removed to form the input slit 8 with only a section of the optical core 10 exposed, effectively creating a slit on the output facet of the input optical fiber 2. The exposed strip, i.e. input slit 8, has a width w equal to or narrower than the width of the second cylindrical lens 6 and narrower than the optical core 10 of the input optical fiber 2. The length of the input slit 8 can be anything up to the outer diameter of the input optical fiber, preferably greater than the diameter of the optical core 10. The width of the input slit 8 is limited on the low end by the ability to focus the laser beam used for ablation, e.g. 5 microns. There is no upper limit on the physical width of the input slit 8, but anything wider than the diameter of the optical core 10 would have no effect.

An exemplary method of manufacture includes coating the tip of the input optical fiber 2 with a reflective and/or metallized coating 9, and then removing, e.g. by laser ablating, a strip of the coating 9 extending across a diameter of the tip of the input optical fiber 2, with a width w equal to or narrower than the width of the second cylindrical lens 6 and less than the diameter of the optical core 10 of the input optical fiber 2, exposing the input slit 8 with only a section of the optical core 10 exposed. The exposed section of the optical core 10 has straight sides and rounded ends.

The second side 11 of the second lens 6 may comprise a single lensed section with a single radius of curvature or multiple lensed sections with different radiuses of curvature. For example, in some embodiments the second side 11 may comprise a first lens section 13' with a first curved surface with a first focal length and a first radius of curvature for receiving the input optical signal 5 from the input port and for reflecting the input optical signal 5 onto a dispersive element 12, such as a reflective diffraction grating. The radius of curvature of the first and second lens section 13' and 13" of the second side 11 of the second lens 6 are typically between 30 mm - 150mm, and preferably with a focal length 10 to 15 times longer than the first lens 3. The first lens section 13' collimates the beam of light in the x-axis, i.e. the beam of light is now collimated in both axes, and directs the input optical signal 5 onto the dispersive element 12

The dispersive element 12, e.g. diffraction grating, is either bonded to or etched into the first side of the second cylindrical lens 6, i.e. an immersed grating. The dispersive element 12 is configured to reflect and angularly disperse the input optical signal 5 into a spectrum of light comprising the various optical wavelength ranges s, e.g. 51 to 5n. As with an immersed grating, the higher refractive index, e.g. n > 1, preferably n >1.4, and more preferably n > 3, allows smaller components to achieve comparable resolution performance and makes it easier to focus light into the spectrometer, thereby increasing throughput. Altogether, by removing air gaps between components, such a design is inherently compact and robust. The main advantage of an immersed grating is an increase in angular dispersion by a factor of the refractive index, n, which enables a required resolving power to be achieved using a smaller grating.

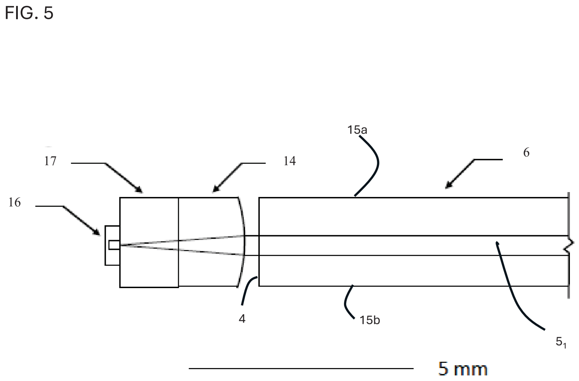

The angularly dispersed optical wavelength ranges, e.g. 51 to 5n, from the dispersive element 12 are then reflected a second time from the second lens section 13" of the second lens 6, with a second curved surface with second focal length and a second radius of curvature, which focuses the optical wavelength ranges, e.g. 51 to 5n, in the second direction, e.g. the x-axis. The second focal length and the second radius of curvature, can be the same or different than the first focal length and the first radius of curvature. With reference to FIG. 5, at an output port the optical wavelength ranges, e.g. 51 to 5n, are then focused in the first direction, e.g. the y-axis, by a third lens 14, e.g. focusing and cylindrical, disposed along the first side 4 adjacent the dispersive element 12, and finally imaged onto an optical detector array 16, e.g. a linear detector array, mounted on a support block 17. The intensity of light on each element of the optical detector array 16 corresponds to the intensity of light of a specific, discrete wavelength range (depending on the resolution). The full distribution of intensity measured on the optical detector array 16 corresponds to the spectrum of the input optical signal 5 from the input optical fiber 2.

Overall the spectrometer 1 benefits from having more pixels in the optical detector array 16, allowing for resolving small spectral differences and can be binned in more coarse applications for increased dynamic range. The resolution of the spectrometer 1 can range from 50 pm to 15 nm, preferably 250 pm to 5 nm, depending on the density of the dispersive element 12, the size of the pixels in the optical detector array 16, and the focused spot size on the optical detector array 16.

FIG. 2 shows a detailed representation of the beam paths through the spectrometer 1. The focal length of the first lens 3 is selected to achieve a beam size in the collimated dimension (y-axis) that is slightly less than the thickness of the second lens 6. i.e. the monolithic block. The second lens 6 can be as thin as 100 µm to 200 µm . The radius of curvature of the second lens 6 is designed to collimate the beam in the x-axis such that it illuminates the desired length of the dispersive element 12. In combination with the groove density of the dispersive element 12, this determines the spectral resolution and spectral range of the spectrometer 1. The dispersive element 12 can be bonded to or etched directly into the first side of the second lens 6. The second reflection off of the second curved section 13" focuses the light in the second direction, e.g. the x-axis, and directs the plurality of ranges 51 to 5n towards the optical detector array 16. The third lens 14 focuses the spectrally dispersed light in the y-axis, leading to small spots on the optical detector array 16. The detectors in the optical detector array 16 can be angled to ensure uniform spot size across the whole array. The first lens 3, the second lens 6 and the third lens 14 are each comprised of a material transparent to the desired wavelength range.

The refractive index of the second lens 6 is larger than the refractive index of air, i.e. greater than 1, preferably greater than 1.4, and more preferably greater than 3, and generally increases the system etendue of the spectrometer 1. System etendue is an important factor for comparing spectrometer performance, and can be thought of as how much light the system can collect. Considering a spectrometer accepting light from a source, system etendue can be defined as the area of the entrance pupil times the solid angle the source subtends as seen from the pupil times the square of the refractive index. To understand how the index influences etendue, consider that a material with higher refractive index will reduce the divergence angle of a beam of light that enters it, making it easier to collect and collimate light. Therefore, when comparing two spectrometers of similar design and size, one made traditionally with air gaps between optical elements and one fully immersed in a material with higher refractive index, the immersed design will have a higher etendue by a factor of the index squared. For example, for infrared wavelengths (>1.2 microns), there is the possibility of using silicon, e.g. refractive index of 3.5, as the transmissive optical material, resulting in a relative increase in etendue of approximately 12 times.

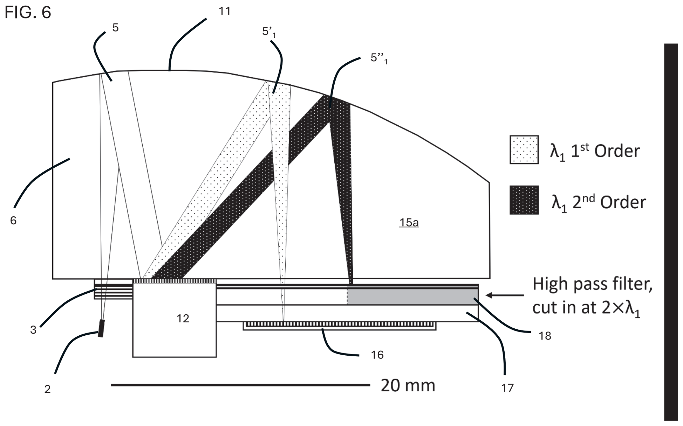

With reference to FIG. 6, for spectrometers 1 covering more than one octave of spectral range, a dispersive prism or high pass filter 18 may be added at the output of the spectrometer 1 as an order sorting filter. The high pass filter 18 is positioned to block the higher order wavelength ranges, e.g. second order wavelength ranges 51", from reaching the optical detector array 16, while enabling the first order wavelength ranges, e.g. 51', to pass to the optical detector array 16. To avoid having the dispersive prism or high pass filter 18, a reduced range is somewhat preferred. The range is governed by the grating lines per mm (l/mm) and the refractive index of the dispersive element 12 and the transmissive properties of the material chosen for the second lens 6. Considering the whole design space, individual spectrometers 1 could be tailored to wavelength ranges including UV (as low as 200 nm) and up to mid IR (as high as 6000 nm). In one exemplary embodiment, the entire silicon transparency range, e.g. wavelengths greater than 1.1 µm, can be covered by one device. By switching to a low l/mm grating and calcium fluoride (CaF2), a wavelength range of 900 nm to 6000 nm is easily achieved.

Regarding the thickness of the spectrometer 1, while the collimated beam size in the first direction, e.g. the y-axis, should ideally be smaller than the thickness of the second lens 6, this is not necessary. If the thickness is smaller than the beam size, the beam will reflect off the top and bottom of the second lens 6 at glancing angles and experience total internal reflection. This waveguide effect will have a slight negative impact on the collimation, but will not change the direction of propagation or significantly reduce throughput. The net result is "taller" spots on the optical detector array 16, but this is easily compensated by using rectangular pixels to collect all the light and has no impact on spectral resolution. This theoretically allows the thickness of the second lens 6 to be reduced to hundreds of microns. Accordingly, the thickness of the spectrometer 1, i.e. the monolithic block of the second lens 6, is not limited by the beam size, so the lower end of the range can be quite small, e.g. 0.2 mm, especially for higher index materials n > 3, e.g. silicon. The thickness of the second lens 6 is between 0.2 mm up to 1 cm, e.g. only limited by grating manufacturability. Typically, the preferable range of thickness is 2 mm to 6 mm, based on typical optical fibers and optical detectors available.

A monolithic, fully-immersed spectrometer 1 using crossed cylindrical lenses, i.e. first and third lenses 3 and 14 crossed with the second lens 6. The crossed cylindrical lenses allow independent focusing of the input optical beam 5 along the two principal axes, e.g. x-axis and y-axis, perpendicular to the optical axis. The first lens 3 "flattens" the beam 5 before it enters the body of the spectrometer 1, i.e. the second lens 6, so the second lens 6 only needs to focus in one axis, i.e. the second or x axis. This restricts the curvature to 1-dimension and therefore reduces the thickness of the device by an order of magnitude compared to a design based on spherical lenses. The fully immersed design has the desirable effect of protecting nearly all the optical elements from particulate contamination.

In some exemplary embodiments, a main optical input is optically coupled to a plurality of physically stacked spectrometers 1, each with an input optical fiber 2, which would allow customization of each spectrometer 1 spectrally and be easy to manufacture. The stacked assembly could be bonded directly to a 2D sensor surface. A switch or a multiplexer could be disposed between the main optical input and the plurality of input optical fibers 2 for directing the input optical signal 5 to the desired spectrometer 1.

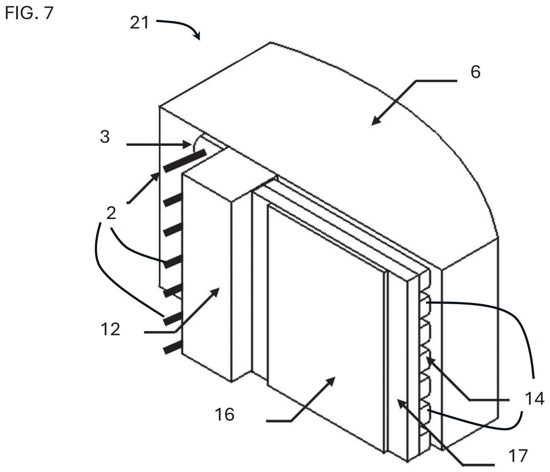

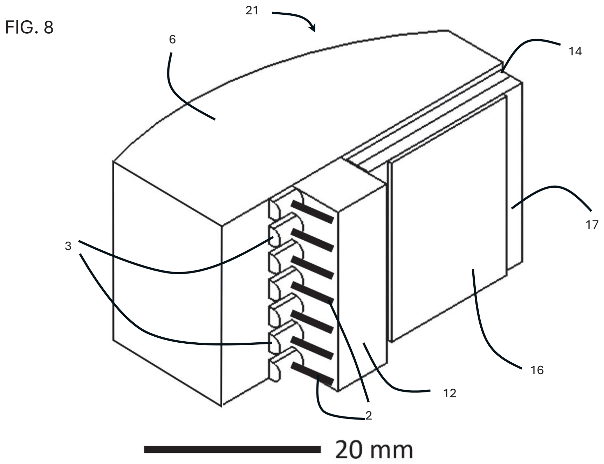

With reference to FIGS. 7 and 8, in some embodiments of a spectrometer 21 multiplexing is provided by simply increasing the height of the second cylindrical lens 6 and stacking additional input optical fibers 2 and first lenses 3 in a vertical array. This is possible because the light inside the second lens 6 is vertically collimated by the first lens(es) 3, so additional vertical input optical signals 5, i.e. different channels, will not interfere spatially. Each input port, i.e. input optical signal 5 or channel, will have a respective first lens 3 and a respective third lens 14, and they can all conveniently share the second lens 6 and the single 2D detector array 16. The spectrometer 21 in Fig. 7 shows the second lens 6 with a height of 20 mm and 7 independent input ports, but the total height and number of input ports can be customized. The main limiting factor will likely be the available size of 2D detector arrays, e.g. typically up to 25 mm, but expensive large-format detectors can reach up to 80 mm.

In the simplest variant, the same dispersive element 12, e.g. grating, can be extended vertically (y-axis) configured for use with all of the input optical signals 5 from all of the input optical fibers 2, which is convenient for manufacturing and would allow the spectrometer 21 to behave identically for each channel. In that case, the multiple inputs could be used to make the same measurement simultaneously while monitoring different experiments, or different locations on a single sample, for example.

In another variant, different respective dispersive elements 12, e.g. gratings, with different lines/mm for different detector arrays 16 could be stacked to give a unique wavelength range for each input optical signal 5 or input port, i.e. input optical fiber 2. This would allow an exceptionally large wavelength range (likely limited only by the detector material) with virtually no tradeoff in resolution, since the number of pixels per input optical signal 5, i.e. channel, is the same as the original single channel version (thanks to the 2D detector array 16). The one tradeoff comes in throughput, as the input light would need to be split evenly between all channels.

In an additional variant, the customization space can be increased further by allowing the use of different detector arrays 16 for each vertical channel. This would allow, for example, some channels to use a silicon detector (typical range of 180 nm to 1100 nm) and some to use an InGaAs detector (typical range of 0.5 µm to 2.6 µm), extending the aggregate range of the spectrometer 21 beyond what is achievable with a single detector array 16. This could be done with individual linear detector arrays 16 for each channel, or with 2D detector arrays that serve different channels, e.g. two detectors mounted vertically such that each is illuminated by a unique half of the total channels.

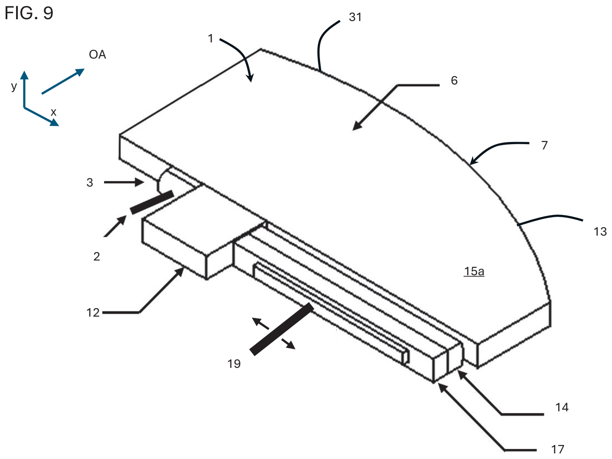

With reference to FIG. 9, in some embodiments the detector array 16 is replaced with a movable output port, e.g. optical fiber 19. The movable optical fiber 19 is able to collect the focused, spectrally dispersed light, e.g. 5'1, so it can be diverted to another device or application, e.g. an application that requires a narrow wavelength light source. By moving, e.g. reciprocating, the movable optical fiber 19 along the plane (x-axis) that would typically be occupied by the detector array 16, the wavelength range of light collected by the movable optical fiber 19 can be selected. In this embodiment, the device is essentially a monochromator 31. Compared to the main spectrometer embodiment, the resolution of the monochromator 31 would depend on all the same factors regarding the three lenses 3, 6 and 14, and the dispersive element 12, but instead of depending on the number and size of detector pixels, the resolution would be influenced by the fiber core diameter of the movable optical fiber 19 and the accuracy and precision of the motion control used to position the movable optical fiber 19.

The foregoing description of one or more example embodiments has been presented for the purposes of illustration and description. It is not intended to be exhaustive or to limit the invention to the precise form disclosed. Many modifications and variations are possible in light of the above teaching. It is intended that the scope of the disclosure be limited not by this detailed description.

## Claims

1. A spectrometer comprising:
an input port for launching a beam of light;
a first cylindrical lens for collimating the beam of light in only a first direction;
a monolithic second cylindrical lens, including a curved reflective surface, for collimating the beam of light in a second direction, perpendicular to the first direction, and reflecting the beam of light;
a diffractive element for angularly dispersing the beam of light into a plurality of optical wavelength ranges and directing the plurality of optical wavelength ranges back to the curved reflective surface, which focuses the plurality of optical wavelength ranges in the second direction;
a third cylindrical lens configured for focusing the plurality of optical wavelength ranges in the first direction, providing a plurality of spots; and
a detector array for receiving the plurality of spots.

2. The spectrometer according to claim 1, wherein the input port includes an optical fiber with an optical core surrounded by cladding; and wherein the optical fiber includes a reflective coating on an end thereof with a transparent slit therein extending diametrically across the end with a width narrower than a diameter of the optical core.

3. The spectrometer according to claim 2, wherein the width of the transparent slit is ¼ to ½ the diameter of the optical core.

4. The spectrometer according to claim 1, wherein the input port includes an optical fiber with an optical core surrounded by cladding; and wherein the first lens includes a reflective coating on an end thereof with a transparent slit therein extending diametrically across the end with a width narrower than the optical core.

5. The spectrometer according to claim 1, wherein the second lens comprises a single lensed section with a single radius of curvature.

6. The spectrometer according to claim 4, wherein the single radius of curvature of the second lens is between 30 mm to 150 mm.

7. The spectrometer according to claim 1, wherein the second lens comprises multiple lensed sections with different radiuses of curvature.

8. The spectrometer according to claim 1, wherein the second lens has a thickness of 0.2 mm-10 mm.

9. The spectrometer according to claim 1, wherein the second lens has a thickness of 100 µm to 200 µm.

10. The spectrometer according to claim 1, wherein the dispersive element is provided directly into a side of the second lens.

11. The spectrometer according to claim 1, wherein the second lens has a refractive index greater than 1.4.

12. The spectrometer according to claim 1, wherein the second lens has a refractive index greater than 3.

13. The spectrometer according to claim 1, further comprising:
a plurality of additional input ports for launching a plurality of additional beams of light;
a plurality of additional first lenses, each of the plurality of first lenses configured for collimating a respective one of the plurality of additional beams of light in only the first direction;
wherein the second lens collimates the plurality of additional beams of light in the second direction, and reflects the plurality of additional beams of light;
wherein the diffractive element angularly disperses each of the plurality of additional beams of light into a respective plurality of optical wavelength ranges, and directs each of the respective plurality of optical wavelength ranges back to the curved reflective surface, which focuses each of the respective plurality of optical wavelength ranges in the second direction;
a plurality of additional third lenses configured for focusing the respective plurality of optical wavelength ranges in the first direction, providing a plurality of additional spots; and
wherein the detector array receives each of the respective plurality of optical wavelength ranges as the plurality of additional spots.

14. The spectrometer according to claim 13, wherein the diffractive element comprises a plurality of gratings with different lines/mm configured to provide a different wavelength band for each respective input optical signal.

15. The spectrometer according to claim 13, wherein the detector array comprises a plurality of detector arrays, each with a different wavelength band for each input optical signal.

16. A spectrometer comprising:
an input port for launching a beam of light;
a first cylindrical lens for collimating the beam of light in only a first direction;
a monolithic second cylindrical lens, including a curved reflective surface, for collimating the beam of light in a second direction, perpendicular to the first direction, and reflecting the beam of light;
a diffractive element for angularly dispersing the beam of light into a plurality of optical wavelength ranges, and directing the plurality of optical wavelength ranges back to the curved reflective surface, which focuses the plurality of optical wavelength ranges in the second direction;
a third cylindrical lens configured for focusing the plurality of optical wavelength ranges in the first direction, providing a plurality of spots; and
a movable optical fiber reciprocatable across a focal plane of the third cylindrical lens to collect one of the plurality of spots.

17. The spectrometer according to claim 16, wherein the input port includes an optical fiber with an optical core surrounded by cladding; and wherein the optical fiber includes a reflective coating on an end thereof with a slit removed therefrom extending diametrically across the end with a width narrower than the optical core.

18. The spectrometer according to claim 16, wherein the input port includes an optical fiber with an optical core surrounded by cladding; wherein the first lens includes a reflective coating on an end thereof with a transparent slit therein extending diametrically across the end with a width narrower than a diameter of the optical core; and wherein the width of the transparent slit is ¼ to ½ the diameter of the optical core.

19. The spectrometer according to claim 16, wherein the second lens comprises a single lensed section with a single radius of curvature.

20. The spectrometer according to claim 19, wherein the single radius of curvature of the second lens is between 30 mm to 150 mm.
